# EUROPÄISCHE PATENTSCHRIFT

(11) **EP 3 805 285 B1**
(45) Veröffentlichungstag und Bekanntmachung des Hinweises auf die Patenterteilung: **10.07.2024**
(21) Anmeldenummer: 19201881.0
(22) Anmeldetag: 08.10.2019
(51) Int. Cl.: C08G 18/09, C08G 18/22, C08G 18/42, C08G 18/48, C08G 18/76, C08J 9/14

(54) **HERSTELLUNG VON POLYURETHANHARTSCHAUM**
PREPARATION OF POLYURETHANE RIGID FOAM
FABRICATION DE MOUSSE DURE DE POLYURÉTHANE

(43) Veröffentlichungstag der Anmeldung: 14.04.2021
(73) Patentinhaber: Evonik Operations GmbH, 45128 Essen (DE)
(72) Erfinder: GLOS, Martin, 46325 Borken (DE); GRIMMINGER, Jobst, 25479 Ellerau (DE); PANITZSCH, Torsten, 24558 Henstedt-Ulzburg (DE); FIEDEL, Olga, 45239 Essen (DE)
(74) Vertreter: Evonik Patent Association

(56) Entgegenhaltungen:
- WO-A1-2017/160361
- WO-A1-2017/160362
- WO-A1-95/30700
- CH-A- 343 635
- DE-A1- 2 502 331
- DE-A1- 2 753 458

## Beschreibung

Die vorliegende Erfindung liegt auf dem Gebiet der Polyurethane, insbesondere der Polyurethanhartschäume. Insbesondere betrifft sie die Herstellung von Polyurethanhartschäumen unter Verwendung spezieller Salze, sowie weiterhin die Verwendung der Schäume, die damit hergestellt wurden. Es handelt sich im Rahmen der vorliegenden Erfindung um Polyurethanhartschäume.

Unter Polyurethan (PU) wird im Rahmen der vorliegenden Erfindung insbesondere ein Produkt, erhältlich durch Reaktion von Polyisocyanaten und Polyolen bzw. Verbindungen mit Isocyanat-reaktiven Gruppen, verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung insbesondere Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden Polyurethan auch weitere funktionelle Gruppen gebildet werden, wie z.B. Allophanate, Biurete, Harnstoffe, Carbodiimide, Uretdione, Isocyanurate oder Uretimine.

Im Rahmen der vorliegenden Erfindung steht insbesondere die Bildung von Polyisocyanuraten im Vordergrund. Diese Reaktion wir als Trimerisierung bezeichnet, da formal drei Isocyanat-Gruppen zu einem Isocyanurat-Ring reagieren.

Bei der Herstellung von Polyurethan- und Polyisocyanurat-Hartschaumstoffen werden verschiedene Katalysatoren eingesetzt, um das Reaktionsprofil der Verschäumung und die Gebrauchseigenschaften des Schaumes in wesentlichem Maße positiv beeinflussen. Hierbei ist die Bildung von Polyisocyanuraten vorteilhaft, da diese zu guten mechanischen Eigenschaften (hohe Stauchhärte) und verbesserten flammhemmenden Eigenschaften führen.

Verschiedene Veröffentlichungen bezüglich der Verwendung von Katalysatoren zur Verbesserung der Stauchhärte bzw. Unterstützung der Trimerisierungsreaktion bei der Herstellung von PU-Hartschäumen sind bekannt.

Die EP 1 745 847 A1 beschreibt Trimerisierungskatalysatoren auf Basis von Kaliumoctoat und Lösungsmitteln, die gegen die Reaktion mit Isocyanaten inert sind.

In WO 2016/201675 werden Trimerisierungskatalysatoren beschrieben, bestehend aus Zusammensetzungen basierend auf sterisch gehinderten Carboxylaten und tert. Aminen, die eine Isocyanat-reaktive Gruppe tragen.

Die WO 2013/ 074907 A1 beschreibt die Verwendung von Tetraalkylguanidin-Salzen aromatischer Carbonsäuren als Katalysatoren für Polyurethan-Schäume.

Aufgabe der vorliegenden Erfindung war es, die Bereitstellung von Polyurethan- bzw. Polyisocyanurat-Hartschaumstoffen zu ermöglichen, die besonders vorteilhafte Gebrauchseigenschaften, wie insbesondere gute Stauchhärte und/oder Eindruckhärte schon nach kurzer Reaktionszeit aufweisen. Dabei sollte allerdings der Einfluss auf das Steigprofil vorzugsweise möglichst gering gehalten werden.

Überraschenderweise wurde nun gefunden, dass der Einsatz von erfindungsgemäßen Salzen von Aminosäure-Derivaten bei der PU-Hartschaumherstellung zu PU-Hartschäumen mit verbesserten Gebrauchseigenschaften führt. Insbesondere wird die Trimierisierung verbessert, wodurch die Schäume schnell aushärten, das heißt zu einem frühen Zeitpunkt schon eine hohe Stauchhärte und hohe Eindruckhärte aufweisen. Ein besonderer Vorteil der Erfindung liegt weiterhin darin, dass der Einsatz der erfindungsgemäßen Aminosäure-Derivate es dennoch ermöglicht, dass der Einfluss auf das Steigprofil möglichst gering gehalten werden kann. Dies ist sehr vorteilhaft, da man sonst Probleme mit der Fließfähigkeit der Reaktionsmischung bekommen kann, was zu erheblichen Verarbeitungsproblemen führt.

Mit der erfindungsgemäßen Lösung können somit PU-Hartschaum basierte Produkte wie z.B. Isolationspanele oder Kühlmöbel mit ganz besonders hoher Qualität hergestellt und die Prozesse zur Herstellung der PU-Hartschäume können effizienter gestaltet werden.

Ein zusätzlicher Vorteil der Erfindung ist die gute ökotoxikologische Einstufung der verwendeten Chemikalien, insbesondere der Salze von Aminosäure-Derivaten.

Die Erfindung hat den weiteren Vorteil, dass mit ihrer Hilfe PU-Hartschäume hergestellt werden können, die wenig Schaumdefekte aufweisen.

Der Gegenstand der Erfindung ist eine Zusammensetzung zur Herstellung von Polyurethanhartschaum, umfassend zumindest eine Isocyanat-Komponente, eine Polyolkomponente, optional einen Schaumstabilisator, optional Treibmittel,
wobei die Zusammensetzung mindestens einen Katalysator, der die Ausbildung einer Urethan- oder Isocyanurat-Bindung katalysiert, enthält,
wobei der Katalysator Salze von Aminosäure-Derivaten umfasst, wobei die Aminosäure-Derivate erhältlich sind durch Umsetzung von Aminosäuren und aromatischen Carbonsäuren, aromatischen Carbonsäureestern, aromatischen Carbonsäurehalogeniden und/oder aromatischen Carbonsäureanhydriden.

Die erfindungsgemäßen Salze von Aminosäure-Derivaten sind formal ableitbar aus der Umsetzung von aromatischen Carbonsäuren und Aminosäuren, insbesondere sind sie gemäß Anspruch 1 auch erhältlich durch Umsetzung von Aminosäuren und aromatischen Carbonsäuren, aromatischen Carbonsäureestern, aromatischen Carbonsäurehalogeniden und/oder aromatischen Carbonsäureanhydriden. Dabei kann die Überführung in das Salz durch die herkömmlichen Methoden, wie beispielsweise durch Umsetzung mit den üblichen Basen wie beispielsweise KOH, NaOH oder entsprechenden Ammoniumhydroxiden vorgenommen werden.

Besonders bevorzugte erfindungsgemäße Salze von Aminosäure-Derivaten genügen der folgenden Formel (I) 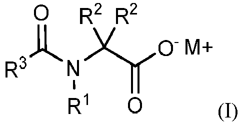 worin
R³ ein aromatischer Rest, ggf. mehrkerniger aromatischer Rest ist, der Substitutionen aufweisen kann, optional auch weiteren Carboxy-Funktionen, an denen weitere Aminosäuren angebunden sein können,
wobei R³ vorzugsweise 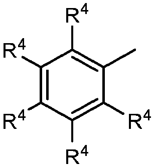 ist,
R¹, R², R⁴ sind unabhängig voneinander H, C₁ bis C₁₈ Alkyl, Alkenyl, Aryl oder Alkylaryl, die auch substituiert sein können,
M⁺ steht für ein Kation, wie vorzugsweise Akalimetallkation oder Ammonium-Kation oder ein substituiertes Ammonium-Kation, bevorzugt Li⁺, Na⁺, K⁺, Rb⁺, Cs⁺ oder Ammonium-Verbindungen wie vorteilhafterweise Tretraalkylammonium, Trialkylhydroxyalkylammonium, Benzyltrialkylammonium, Tetramethylammonium, Tetraethylammonium, Tetrabutylammonium, Tetrapropylammonium, Dimethyldiallylammonium, Trimethyl(2-hydroxypropyl)ammonium, Triethyl(2-hydroxypropyl)ammonium, Tripropyl(2-hydroxypropyl)ammonium, Tributyl(2-hydroxypropyl)ammonium, Dimethylbenzyl(2-hydroxypropyl)ammonium, Dimethylbenzyl(2-hydroxyethyl)ammonium sowie Kombinationen daraus.

Dabei ist insbesondere bevorzugt, dass R³ für Phenyl, Alkyl-Phenyl steht, oder für einen Rest steht, der sich von Phthalsäure, Iso-Phthalsäure, Terephthalsäure oder Pyrromelitsäure ableitet.

Eine besonders bevorzugte Ausführungsform liegt vor, wenn die Salze von Aminosäure-Derivaten der folgenden Formel (II) genügen, 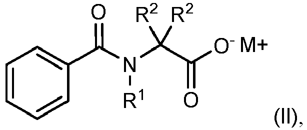
mit R¹, R², M⁺ wie zuvor definiert,
wobei vorzugsweise R² jeweils H sind,
wobei weiter bevorzugt R¹ und R² jeweils H sind,
wobei insbesondere R¹ und R² jeweils H sind und M⁺ für Na⁺, K⁺ oder NR¹₄⁺ steht, R¹ wie zuvor definiert.

Besonders bevorzugte Strukturen sind demnach: 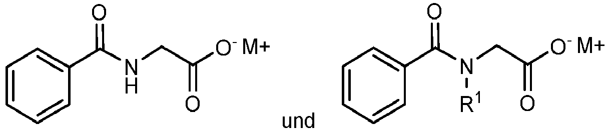 mit M⁺ und R¹ wie zuvor definiert.

Besonders bevorzugt sind die Salze der Hippursäure, 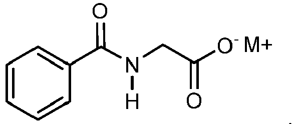 mit M⁺ wie zuvor definiert, vorzugsweise Natrium, Kalium oder Ammonium als Kation, insbesondere bevorzugt das Natriumsalz:

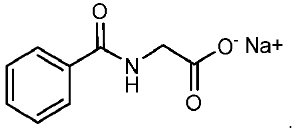

Die Herstellung der erfindungsgemäßen Salze kann nach den bekannten Methoden erfolgen.

Hippursäure sowie seine Salze davon sind kommerziell erhältlich. Die Herstellung ist dem Fachmann bekannt. So kann die Herstellung von Hippursäure z.B. durch Umsetzung von Benzoylchlorid mit Glyzin erfolgen (Schotten Baumann Methode). Ebenso kann die Amidierung auf Basis von Benzoesäureester (Methylester) und Glycin erfolgen. Die Herstellung der Salze wird dann beispielsweise mit den entsprechenden Basen wie beispielsweise KOH, NaOH oder entsprechenden Ammoniumhydroxiden vorgenommen werden.

Für die Anwendung in PU-Schäumen ist oftmals eine technische Qualität ausreichend, da eventuelle Nebenbestanteile aus den Herstellprozessen die PU-Schaumherstellung nicht beeinflussen. Dies ist ein weiterer erheblicher Vorteil der Erfindung.

Gemäß einer bevorzugten Ausführungsform der Erfindung können die erfindungsgemäßen Salze in einem Trägermedium dem Reaktionsgemisch zugegeben werden. Als Trägermedien können alle als Lösungsmittel geeigneten Substanzen verwendet werden. Es kommen beispielweise Glykole, Alkoxylate oder Öle synthetischer und/oder natürlicher Herkunft in Frage. Der Einsatz eines Trägermediums für die erfindungsgemäßen Salze von Aminosäure-Derivaten entspricht einer bevorzugten Ausführungsform der Erfindung. Die erfindungsgemäßen Salze können auch als Teil von Zusammensetzungen mit verschiedenen Trägermedien eingesetzt werden.

Es entspricht einer bevorzugten Ausführungsform der Erfindung, wenn der gesamte Massenanteil an erfindungsgemäßen Salzen am fertigen Polyurethanschaum von 0,01 bis 10 Gew.-%, bevorzugt von 0,1 bis 5 Gew.-% beträgt.

Es entspricht einer bevorzugten Ausführungsform der Erfindung, wenn die erfindungsgemäße Zusammensetzung Wasser und/oder Treibmittel, optional zumindest ein Flammschutzmittel und/oder weitere Additive umfasst, welche bei der Herstellung von Polyurethanhartschaum vorteilhaft einsetzbar sind. Es können neben dem erfindungsgemäßen Salz auch noch weitere Katalysatoren enthalten sein.

Eine besonders bevorzugte erfindungsgemäße Zusammensetzung enthält die folgenden Bestandteile
a) mindestens eine isocyanat-reaktive Komponente, insbesondere Polyole
b) mindestens ein Polyisocyanat und/oder Polyisocyanat-Präpolymer
c) einen erfindungsgemäßen Katalysator wie zuvor beschrieben (erfindungsgemäße Salze von Aminosäure-Derivaten),
d) (optional) weitere Katalysatoren,
e) (optional) eine Schaum-stabilisierende Komponente basierend auf Siloxanen oder anderen Surfactants
f) ein oder mehrere Treibmittel
g) weiter Additive, Füllstoffe, Flammschutzmittel.

Einzelne einsetzbare Komponenten (hier mit a) bis g) bezeichnet) werden weiter unten noch genauer beschrieben. Die Komponente c) wurde bereits beschrieben.

In der erfindungsgemäßen Zusammensetzung beträgt der Massenanteil an erfindungsgemäßem Salz c) bezogen auf 100 Massenteile Polyolkomponente a) vorzugsweise von 0,1 bis 10 pphp, bevorzugt von 0,2 bis 5 pphp und besonders bevorzugt von 0,5 bis 3 pphp.

Ein weiterer Gegenstand der Erfindung ist ein Verfahren zur Herstellung von Polyurethanhartschaum, durch Umsetzung einer oder mehrerer Polyolkomponenten mit einer oder mehrerer Isocyanatkomponenten, wobei die Umsetzung in Gegenwart eines Katalysators erfolgt, der die Ausbildung einer Urethan- oder Isocyanurat-Bindung katalysiert,
wobei der Katalysator Salze von Aminosäure-Derivaten umfasst, welche zuvor beschrieben wurden, insbesondere unter Einsatz einer Zusammensetzung, wie zuvor beschrieben. Dabei können neben dem erfindungsgemäßen Salz auch noch weitere Katalysatoren eingesetzt werden.

Dabei ist es bevorzugt, dass die Salze von Aminosäure-Derivaten dem Reaktionsgemisch zur Herstellung des PU-Hartschaums in einem Trägermedium zugeführt werden, vorzugsweise umfassend Glykole, Alkoxylate oder Öle synthetischer und/oder natürlicher Herkunft.

Ein weiterer Gegenstand der Erfindung ist die Verwendung von Salzen von Aminosäure-Derivaten welche zuvor beschrieben wurden, als Katalysator bei der Herstellung von Polyurethanhartschaumstoffen, bevorzugt zur Verbesserung der Gebrauchseigenschaften des Polyurethanhartschaumstoffs, insbesondere zur Erhöhung der Stauchhärte des Polyurethanhartschaumstoffs zu einem frühen Zeitpunkt, im Vergleich zu Polyurethanhartschaumstoffen, die ohne die Salze von Aminosäure-Derivaten hergestellt wurden, Stauchhärte bestimmbar nach DIN EN ISO 844:2014-11.

Ein weiterer Gegenstand der Erfindung ist ein Polyurethanhartschaumstoff, erhältlich durch das erfindungsgemäße Verfahren, wie zuvor beschrieben.

Außerdem ist Gegenstand der vorliegenden Erfindung die Verwendung von erfindungsgemäßen Polyurethan- oder Polyisocyanurat-Hartschaumstoffen für Zwecke der thermischen Isolation, vorzugsweise als Dämmplatten und Isolationsmittel sowie für Kühlapparaturen, die als Isoliermaterial einen erfindungsgemäßen Polyurethan- oder Polyisocyanurat-Hartschaumstoff aufweist.

Nachfolgend werden einzelne einsetzbare Komponenten (hier mit a) bis g) bezeichnet) noch genauer beschrieben. Die Komponente c) wurde bereits beschrieben.

Als Polyolkomponente a) geeignete Polyole im Sinne der vorliegenden Erfindung sind alle organischen Substanzen mit einer oder mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Beschichtungen, Polyurethan-Elastomeren oder auch Schaumstoffen; üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz.

Einsetzbar sind Polyetherpolyole. Diese können nach bekannten Verfahren hergestellt werden, beispielsweise durch anionische Polymerisation von Alkylenoxiden in Gegenwart von Alkalihydroxiden, Alkalialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Bortrifluorid-Etherat oder durch Doppel¬metall¬cyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl, höhere polyfunktionelle Polyole, insbesondere Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung

Einsetzbar sind Polyesterpolyole. Diese basieren auf Estern mehrwertiger aliphatischer oder aromatischer Carbonsäuren, bevorzugt mit 2 bis 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Trimethylolpropan und Glycerin erhalten.

Einsetzbar sind Polyetherpolycarbonatpolyole. Dies sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von CO2 als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von CO2 und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Einsetzbar sind Polyole auf Basis nachwachsender Rohstoffe "Natural oil based polyols" (NOPs). NOPs zur Herstellung von Polyurethanschäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO2004/020497, US2006/0229375, WO2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (WO2004/020497, US2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367).

Eine weitere Klasse von einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Eine weitere Klasse von einsetzbaren Polyolen sind solche, die als Prepolymere durch Umsetzung von Polyol mit Isocyanat in einem Molverhältnis von vorzugsweise 100 zu 1 bis 5 zu 1, bevorzugt 50 zu 1 bis 10 zu 1, erhalten werden. Solche Prepolymere werden vorzugsweise gelöst in Polymer angesetzt, wobei das Polyol bevorzugt dem zur Herstellung der Prepolymeren eingesetzten Polyol entspricht.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 350. Ein Index von 100 steht für ein molares Verhältnis der reaktiven Gruppen von 1 zu 1.

Als Isocyanatkomponenten b) werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Besonders bevorzugt werden Isocyanate in einem Bereich von 60 bis 200 mol% relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylen-diisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanato¬methyl¬cyclohexan (Isophorondiisocyanat oder kurz IPDI), 2,4- und 2,6-Hexa¬hydro¬toluylen¬diisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Naphthalindiisocyanat, Diethyltoluoldiisocyanat, Mischungen aus 2,4`- und 2,2`-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden. Ebenso können entsprechende "Oligomere" der Diisocyanate eingesetzt werden (IPDI-Trimer auf basis Isocyanurat, Biurete- Urethdione.) Des Weiteren ist der Einsatz von Präpolymeren auf Basis der oben genannten Isocyanate möglich.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4`-Diphenylmethandiisocyanat (MDI), das so genannte "crude MDI" oder "polymere MDI" (enthält neben dem 4,4`- auch die 2,4`- und 2,2`-Isomeren des MDI und höherkernige Produkte) sowie das als "pure MDI" bezeichnete zweikernige Produkt aus überwiegend 2,4`- und 4,4`-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

Optionale Katalysatoren d) können zusätzlich zum erfindungsgemäßen Katalysator, also den Salzen von Aminosäure-Derivaten, wie zuvor beschrieben, eingesetzt werden. Geeignete optionale Katalysatoren d) im Sinne der vorliegenden Erfindung sind alle Verbindungen, die in der Lage sind die Reaktion von Isocyanaten mit OH- Funktionen, NH-Funktionen oder anderen isocyanat-reaktiven Gruppen sowie mit Isocyanaten selbst zu beschleunigen. Hierbei kann auf die üblichen aus dem Stand der Technik bekannten Katalysatoren zurückgegriffen werden, umfassend z.B. Amine (cyclische, acyclische; Monoamine, Diamine, Oligomere mit einer oder mehreren Aminogruppen), Ammonium-Verbindungen, metallorganische Verbindungen und Metallsalze, vorzugsweise die des Kalium, Zinn, Eisen, Wismut und Zink. Insbesondere können als Katalysatoren Gemische mehrerer Komponenten eingesetzt werden.

Als Komponente e) können Si-freie Surfactants oder auch organomodifizierte Siloxane eingesetzt werden.

Die Verwendung von solchen Substanzen in Hartschäumen ist bekannt. Hierbei können im Rahmen dieser Erfindung alle Verbindungen eingesetzt werden, die die Schaumherstellung unterstützen (Stabilisierung, Zellregulierung, Zellöffnung). Diese Verbindungen sind aus dem Stand der Technik hinreichend bekannt.

Entsprechende, im Sinne dieser Erfindung einsetzbare Siloxane werden z.B. in den folgenden Patentschriften beschrieben:
CN 103665385, CN 103657518, CN 103055759, CN 103044687, US 2008/ 0125503, US 2015/0057384, EP 1520870 A1, EP 1211279, EP 0867464, EP 0867465, EP 0275563. Diese vorgenannten Schriften werden hiermit als Referenz eingeführt und gelten als Teil des Offenbarungsgehaltes der vorliegenden Erfindung. Der Einsatz von Polyether-modifizierten-Siloxanen ist besonders bevorzugt.

Die Verwendung von Treibmitteln f) ist optional, je nachdem welches Verschäumungsverfahren verwendet wird. Es kann mit chemischen und physikalischen Treibmitteln gearbeitet werden. Die Wahl des Treibmittels hängt hier stark von der Art des Systems ab.

Je nach Menge des verwendeten Treibmittels wird ein Schaum mit hoher oder niedriger Dichte hergestellt. So können Schäume mit Dichten von 5 kg/m³ bis 900 kg/m³ hergestellt werden. Bevorzugte Dichten sind 8 bis 800, besonders bevorzugt 10 bis 600 kg/m³, insbesondere 30 bis 150 kg/m³.

Als physikalische Treibmittel können entsprechende Verbindung mit passenden Siedepunkten eingesetzt werden. Ebenso können chemische Treibmittel eingesetzt werden, die mit NCO-Gruppen und Freisetzung von Gasen reagieren, wie beispielsweise Wasser oder Ameisensäure. Beispiele für Treibmittel sind verflüssigtes CO2, Stickstoff, Luft, leichtflüchtige Flüssigkeiten, beispielsweise Kohlen¬wasser¬stoffe mit 3, 4 oder 5 Kohlenstoff-Atomen, bevorzugt cyclo-, iso- und n-Pentan, Fluor¬kohlen¬wasserstoffe, bevorzugt HFC 245fa, HFC 134a und HFC 365mfc, Fluor¬chlor¬kohlen¬wasserstoffe, bevorzugt HCFC 141b, Hydrofluoroolefine (HFO) oder Hydrohaloolefine wie z.B. 1234ze, 1234yf, 1233zd(E) oder 1336mzz, Sauerstoff-haltige Verbindungen wie Methyl-formiat, Aceton und Dimethoxymethan, oder Chlorkohlenwasserstoffe, bevorzugt Dichlor¬methan und 1,2-Dichlorethan.

Geeignete Wasser-Gehalte im Sinne dieser Erfindung hängen davon ab, ob zusätzlich zum Wasser noch ein oder mehrere Treibmittel eingesetzt werden oder nicht. Bei rein Wasser getriebenen Schäumen liegen die Werte vorzugsweise bei 1 bis 20 pphp, werden zusätzlich andere Treibmittel eingesetzt, verringert sich die Einsatzmenge auf vorzugsweise 0,1 bis 5 pphp.

Als Zusatzstoffe g) können alle nach dem Stand der Technik bekannten Substanzen verwendet werden, die bei der Herstellung von Polyurethanen, insbesondere von Polyurethanschaumstoffen, Verwendung finden, wie zum Beispiel Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren.

Das erfindungsgemäße Verfahren zur Herstellung von PU-Hartschäumen kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine bevorzugte Polyurethan- bzw. Polyisocyanurat-Hartschaumformulierung im Sinne dieser Erfindung ergibt ein Raumgewicht von 5 bis 900 kg/m³ und hat vorzugsweise die in Tabelle 1 genannte Zusammensetzung.

**Tabelle 1: Zusammensetzung einer bevorzugten Polyurethan- bzw. Polyisocyanurat-Hartschaumformulierung**

| Komponente | Gewichtsanteil |
|---|---|
| Polyol | 0,1 bis 100 |
| Amin-Katalysator | 0 bis 5 |
| Metall-Katalysator | 0 bis 10 |
| Erfingungsgemäße Salze (Salze von Aminosäure-Derivaten) | 0,1 bis 10 |
| Schaumstabilisator (Si-frei oder Si-haltig) | 0 bis 5 |
| Wasser | 0,01 bis 20 |
| Treibmittel | 0 bis 40 |
| Weitere Additive (Flammschutzmittel etc.) | 0 bis 90 |
| Isocyanat-Index: 10 bis 1000 | |

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen verwiesen.

Wie bereits erwähnt, ist ein weiterer Gegenstand der Erfindung ein PU-Hartschaum, erhältlich durch das genannte Verfahren.

Gemäß einer bevorzugten Ausführungsform der Erfindung weist der Polyurethanschaum ein Raumgewicht von 5 bis 900 kg/m³, bevorzugt 8 bis 800, besonders bevorzugt 10 bis 600 kg/m³, insbesondere 30 bis 150 kg/m³ auf.

Es können insbesondere überwiegend geschlossenzellige Schäume hergestellt werden. Die Geschlossenzelligkeit beträgt vorteilhafterweise > 80%, vorzugsweise > 90 %.

Die erfindungsgemäßen PU-Hartschäume können als oder zur Herstellung von Isoliermaterialien, vorzugsweise Dämmplatten, Kühlschränken, Isolierschäumen, Dachhimmeln, Verpackungsschäumen oder Sprühschäumen verwendet werden.

Insbesondere in der Kühlhaus-, Kühlgeräte- und Hausgeräteindustrie; z. B. zur Herstellung von Dämmplatten für Dächer und Wände, als Isoliermaterial in Containern und Lagerhäusern für tiefgekühlte Ware sowie für Kühl- und Gefriergeräte, können die erfindungsgemäßen PU-Schäume mit Vorteil eingesetzt werden.

Weitere bevorzugte Anwendungsfelder liegen im Fahrzeugbau, insbesondere zur Herstellung von Fahrzeughimmel, Karosserieteilen, Innenverkleidungen, Kühlfahrzeugen, Großcontainern, Transportpaletten, Verpackungslaminaten, in der Möbelindustrie, z.B. für Möbelteile, Türen, Verkleidungen, in Elektronikanwendungen.

Erfindungsgemäße Kühlapparaturen weisen als Isoliermaterial einen erfindungsgemäßen PU-Schaum (Polyurethan- oder Polyisocyanuratschaumstoff) auf.

Ein weiterer Gegenstand der Erfindung liegt in der Verwendung des PU-Hartschaums als Isolationsmaterial in der Kältetechnik, in Kühlmöbeln, im Bau-, Automobil-, Schiffbau- und/oder Elektronikbereich, als Dämmplatten, als Sprühschaum, als Einkomponentenschaum.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### BEISPIELE

Zur Herstellung von Schäumen wurden folgende Rohstoffe eingesetzt.
Stepanpol PS 2352: Polyesterpolyol der Firma Stepan
Daltolac R 471: Polyetherpolyol der Firma Huntsman
TCPP: Tris(2-chlorisopropyl)phosphat der Firma Fyrol
KOSMOS 75 von Fa. Evonik Nutrition & Care GmbH, Katalysator auf Basis Kaliumoctoat
POLYCAT 5 von Fa. Evonik Nutrition & Care GmbH, Amin-Katalysator
POLYCAT 8 von Fa. Evonik Nutrition & Care GmbH, Amin-Katalysator
MDI (44V20): Desmodur 44V20L der Fa. Covestro, Diphenylmethan-4,4'-diisocyanat (MDI) mit Isomeren und höherfunktionellen Homologen
Tegostab B 8460 von Fa. Evonik Nutrition & Care GmbH, schaumstabilisierendes Surfactant

### Synthese-Beispiele zur Herstellung der erfindungsgemäßen Trimerisierungs-Katalysatoren (Salze)

Versuch A:
   Na-Hippurat (erhältlich bei Sigma-Aldrich) wurde in Monoethylenglykol gelöst mit einem Gehalt von 25% an Na-Hippurat
Versuch B:
   Hippursäure (erhältlich bei Sigma-Aldrich) in Diethylenglykol gelöst, die Säure mit wässriger NaOH neutralisiert und anschließend das Wasser im Vakuum abdestilliert. Der Gehalt an Na-Hippurat wurde auf 30% eingestellt.
Versuch C:
   Hippursäure (erhältlich bei Sigma-Aldrich) in Diethylenglykol gelöst, die Säure mit wässriger KOH neutralisiert und anschließend das Wasser im Vakuum abdestilliert. Der Gehalt an K-Hippurat wurde auf 30% eingestellt.
Versuch D:
   Umsetzung von Benzoesäuremethylester mit Glycin in DEG als Lösungsmittel unter Verwendung von Na-Methanolat zur Beschleunigung der Amidierung und zur Salzbildung mit der gebildeten Hippursäure. Das überschüssige Methanol wurde im Vakuum abdestilliert. Der Gehalt an Na-Hippurat wurde auf 30% eingestellt.

### Beispiele: Herstellung von PU-Schäumen

Die Durchführung der Verschäumungen erfolgte im Handmischverfahren. Dazu wurden die erfindungsgemäßen Verbindungen, Polyole, Flammschutzmittel, erfindungsgemäße oder nicht erfindungsgemäße Katalysatoren, Wasser, Siloxan-Surfactant und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Anschließend wurde das Isocyanat (MDI) zugegeben, die Reaktionsmischung mit dem beschriebenen Rührer 5 s bei 3000 Upm verrührt.

Die Reaktionsmischungen wurden in entsprechende Becher mit einem Durchmesser an der Oberkannte von 20 cm eingetragen um frei gestiegene Schäume zu erhalten.

Die Menge der Reaktionsmischung wurde so gewählt, dass die Spitze der Schaumkuppe am Ende 10 bis 15 cm über der Oberkante des Bechers lag.

Während des Aufschäumens wurde die Gelzeit bestimmt, um den Einfluss der Katalysatoren auf die Geschwindigkeit des Schäumens zu beurteilen.

Nach 3 Minuten wurden die Schaumkuppen an der Becheroberkante abgeschnitten, so dass man eine runde Schaumfläche erhielt. An dieser Oberfläche wurden die Eindruckhärten der Schäume bestimmt.

### Bestimmungsmethode der Eindruckhärte

Hierzu wurde die Kraft gemessen um einen Stempel mit 4 cm Durchmesser in den Schaum einzudrücken. Es wurden die Eindrückkräfte bei 5 mm Eindrücktiefe gemessen. Die Messung erfolgte nach 4,6,8 und 10 Minuten, wobei der Stempel an in kreisförmiger Anordnung 4 verschiedenen Punkten der Schnittfläche eingedrückt wurde.

### Bestimmungsmethode der Stauchhärte

Die Stauchhärten der Schaumstoffe werden an würfelförmigen Probekörpern mit 5 cm Kantenlänge nach

DIN EN ISO 844:2014-11 bis zu einer Stauchung von 10% gemessen (angegeben wird die in diesem Messbereich maximal aufgetretene Druckspannung).

In Tabelle 2 sind die verwendeten Schaumformulierungen (Form.1 und Form.2) zusammengefasst.

**Tabelle 2**

| Formulierung Beispiel | Form.1 (PUR) | Form. 2 (PIR) |
|---|---|---|
| Daltolac R 471 | 100 | |
| PS 2352 | | 100 |
| Trimer-Kat. (erf. Salz) | variabel. | variabel |
| POLYCAT 8 | 2,8 | |
| POLYCAT 5 | 0,7 | 0,5 |
| KOSMOS 75 | | 0,7 |
| TEGOSTAB B 8460 | 2 | 2 |
| TCPP | | 15 |
| Wasser | 2,5 | 0,5 |
| n-Pentan | | 14 |
| Cyclo-Pentan | 13 | |
| MDI (44V20) | ca. 200 | ca. 190 |
| Index | 130 | 255 |

Verschäumungsergebnisse mit den erfindungsgemäßen Trimerisierungskatalysatoren.

**Tabelle 3**

| Zusammenfassung der Verschäumungsversuche mit verschiedenen erfindungsgemäßen Katalysatoren und Schaumformulierungen. | | | | | | | | |
|---|---|---|---|---|---|---|---|---|
| Angegeben sind die Eindruckhärten in Newton nach der angegebenen Zeit in Minuten (nach dem Mischen mit MDI) | | | | | | | | |
| Schaum Beispiel | Trimer-Kat. | Dosierung | Form.-Nr. | Gelzeit in sec. | 4 min | 6 min | 8 min | 10 min |
| Vgl. 1 | nur Amine (nicht erf.) | | 1 | 52 | 49 | 117 | 180 | 235 |
| 1 | C | 2 | 1 | 46 | 159 | 259 | 317 | 343 |
| 2 | B | 2 | 1 | 48 | 124 | 209 | 282 | 367 |
| 3 | D | 2 | 1 | 48 | 127 | 201 | 287 | 360 |
| 4 | A | 2 | 1 | 47 | 113 | 203 | 257 | 325 |
| Vgl.2 | nur Kosmos 75 (nicht erf.) | 0,7 | 2 | 94 | 87 | 226 | 346 | 435 |
| Vgl. 3 | nur Kosmos 75 (nicht erf.) | 1,5 | 2 | 49 | 266 | 392 | 460 | 501 |
| 5 | B | 2 | 2 | 66 | 108 | 246 | 380 | 440 |
| 6 | B | 3 | 2 | 63 | 144 | 271 | 389 | 462 |
| 7 | C | 2 | 2 | 63 | 140 | 277 | 392 | 474 |
| 8 | C | 3 | 2 | 60 | 138 | 284 | 398 | 480 |
| 9 | D | 2 | 2 | 67 | 123 | 273 | 391 | 488 |
| 10 | A | 2 | 2 | 66 | 136 | 264 | 389 | 498 |

Die erfindungsgemäßen Schäume zeigen jeweils deutlich höhere Eindruckhärten als die Vergleichsbeispiele 1 und 2.

Im Vergleichsbeispiel 3 wird mit höherer Dosis an K-Octoat die Eindruckhärten ebenfalls verbessert. Hierbei wird allerdings die Gelzeit um 15 Sekunden verkürzt gegenüber den erfindungsgemäßen Kandidaten und damit deutlich stärker in das Steigprofil des Schaumes eingegriffen, was unerwünscht ist.

Hieraus ist ersichtlich, dass die erfindungsgemäßen Trimerkatalysatoren mit deutlich geringerer Reduktion der Gelzeit eine verbesserte Aushärtung des Schaumes ermöglichen.

Dies ist ein enormer Vorteil, da durch den geringen Einfluss auf die Gelzeit die Verarbeitbarkeit der Reaktionsmischung erhalten bleibt, z.B. hinsichtlich der Fließfähigkeit der schäumenden Mischung, und gleichzeitig die Aushärtung des Schaumes beschleunigt wird.

Aus den Versuchen ist klar ersichtlch, dass die erfindungsgemäßen Trimerisierungskatalysatoren zu einer verbesserten Aushärtung des Schaums führen. Die zuvor beschriebenen sehr guten Resultate für die Eindruckhärten der erfindungsgemäßen Schäume korrespondieren mit denen der Stauch härte.

## Patentansprüche

1. Zusammensetzung zur Herstellung von Polyurethanhartschaum, umfassend zumindest eine Isocyanat-Komponente, eine Polyolkomponente, optional einen Schaumstabilisator, optional Treibmittel, **dadurch gekennzeichnet, dass** die Zusammensetzung mindestens einen Katalysator, der die Ausbildung einer Urethan- oder Isocyanurat-Bindung katalysiert, enthält, wobei der Katalysator Salze von Aminosäure-Derivaten umfasst, wobei die Aminosäure-Derivate erhältlich sind durch Umsetzung von Aminosäuren und aromatischen Carbonsäuren, aromatischen Carbonsäureestern, aromatischen Carbonsäurehalogeniden und/oder aromatischen Carbonsäureanhydriden.

2. Zusammensetzung nach Anspruch 1, **dadurch gekennzeichnet, dass** die Salze von Aminosäure-Derivaten der folgenden Formel (I) genügen, 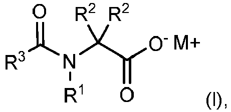 worin
R³ ein aromatischer Rest, ggf. mehrkerniger aromatischer Rest ist, der Substitutionen aufweisen kann, optional auch weiteren Carboxy-Funktionen, an denen weitere Aminosäuren angebunden sein können,
wobei R³ vorzugsweise 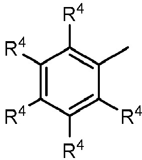 ist,
R¹, R², R⁴ sind unabhängig voneinander H, C₁ bis C₁₈ Alkyl, Alkenyl, Aryl oder Alkylaryl, die auch substituiert sein können,
M⁺ steht für ein Kation, wie vorzugsweise Akalimetallkation oder Ammonium-Kation oder ein substituiertes Ammonium-Kation, bevorzugt Li⁺, Na⁺, K⁺, Rb⁺, Cs⁺ oder substituiertes Ammonium-Kation wie vorteilhafterweise Tretraalkylammonium, Trialkylhydroxyalkylammonium, Benzyltrialkylammonium, Tetramethylammonium, Tetraethylammonium, Tetrabutylammonium, Tetrapropylammonium, Dimethyldiallylammonium, Trimethyl(2-hydroxypropyl)ammonium, Triethyl(2-hydroxypropyl)-ammonium, Tripropyl(2-hydroxypropyl)ammonium, Tributyl(2-hydroxypropyl)-ammonium, Dimethylbenzyl(2-hydroxypropyl)ammonium, Dimethylbenzyl(2-hydroxyethyl)ammonium sowie Kombinationen daraus.

3. Zusammensetzung nach Anspruch 2, **dadurch gekennzeichnet, dass** R³ für Phenyl oder Alkyl-Phenyl steht, oder für einen Rest steht, der sich von Phthalsäure, Iso-Phthtalsäure, Terephthalsäure oder Pyrromelitsäure ableitet.

4. Zusammensetzung nach einem der Ansprüche 1 bis 3, **dadurch gekennzeichnet, dass** die Salze von Aminosäure-Derivaten der folgenden Formel (II) genügen, 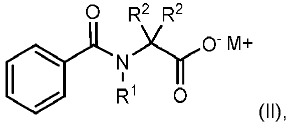
mit R¹, R², M⁺ wie zuvor definiert,
wobei vorzugsweise R² jeweils H sind,
wobei weiter bevorzugt R¹ und R² jeweils H sind,
wobei insbesondere R¹ und R² jeweils H sind und M⁺ für Na⁺, K⁺ oder NR¹₄⁺ steht, R¹ wie zuvor definiert.

5. Zusammensetzung nach einem der Ansprüche 1 bis 4, **dadurch gekennzeichnet, dass** der gesamt enthaltene Massenanteil an Salzen von Aminosäure-Derivaten, bezogen auf den resultierenden Polyurethanschaum, von 0,01 bis 10 Gew.-%, bevorzugt von 0,1 bis 5 Gew.-% beträgt.

6. Verfahren zur Herstellung von Polyurethanhartschaum, durch Umsetzung einer oder mehrerer Polyolkomponenten mit einer oder mehreren Isocyanatkomponenten, **dadurch gekennzeichnet, dass** die Umsetzung in Gegenwart eines Katalysators erfolgt, der die Ausbildung einer Urethan- oder Isocyanurat-Bindung katalysiert, wobei der Katalysator Salze von Aminosäure-Derivaten umfasst, welche den Vorgaben von zumindest einem der Ansprüche 1 bis 5 entsprechen, insbesondere unter Einsatz einer Zusammensetzung gemäß einem der Ansprüche 1 bis 5.

7. Verfahren gemäß Anspruch 6, **dadurch gekennzeichnet, dass** die Salze von Aminosäure-Derivaten dem Reaktionsgemisch zur Herstellung des PU-Hartschaums in einem Trägermedium zugeführt werden, vorzugsweise umfassend Glykole, Alkoxylate oder Öle synthetischer und/oder natürlicher Herkunft.

8. Verwendung von Salzen von Aminosäure-Derivaten, welche den Vorgaben von zumindest einem der Ansprüche 1 bis 5 entsprechen, als Katalysator bei der Herstellung von Polyurethanhartschaumstoffen, bevorzugt zur Verbesserung der Gebrauchseigenschaften des Polyurethanhartschaumstoffs, insbesondere zur Erhöhung der Stauchhärte des Polyurethanhartschaumstoffs zu einem früheren Zeitpunkt, im Vergleich zu Polyurethanhartschaumstoffen, die ohne die Salze von Aminosäure-Derivaten hergestellt wurden, Stauchhärte bestimmbar nach DIN EN ISO 844:2014-11.

9. Polyurethanhartschaumstoff, erhältlich durch das Verfahren nach Anspruch 6 oder 7.

10. Verwendung des Polyurethanhartschaumstoffs gemäß Anspruch 9 für Zwecke der thermischen Isolation, vorzugsweise als Dämmplatten und/oder Isolationsmittel, insbesondere für Kühlapparaturen.

## Claims

1. Composition for production of rigid polyurethane foam, comprising at least one isocyanate component, a polyol component, optionally a foam stabilizer, optionally blowing agent, **characterized in that** the composition contains at least one catalyst that catalyses the formation of a urethane or isocyanurate bond, where the catalyst comprises salts of amino acid derivatives, where the amino acid derivatives are obtainable by reacting amino acids and aromatic carboxylic acids, aromatic carboxylic esters, aromatic carbonyl halides and/or aromatic carboxylic anhydrides.

2. Composition according to Claim 1, **characterized in that** the salts of amino acid derivatives satisfy the following formula (I): 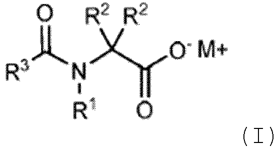 in which
R³ is an aromatic radical, optionally polycyclic aromatic radical that may have substitutions, optionally also further carboxy functions to which further amino acids may be attached,
where R³ is preferably 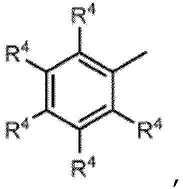
R¹, R², R⁴ are independently H, C₁ to C₁₈ alkyl, alkenyl, aryl or alkylaryl, which may also be substituted,
M⁺ is a cation, such as preferably alkali metal cation or ammonium cation or a substituted ammonium cation, preferably Li⁺, Na⁺, K⁺, Rb⁺, Cs⁺ or substituted ammonium cation such as advantageously tetraalkylammonium, trialkylhydroxyalkylammonium, benzyltrialkylammonium, tetramethylammonium, tetraethylammonium, tetrabutylammonium, tetrapropylammonium, dimethyldiallylammonium, trimethyl(2-hydroxypropyl)ammonium, triethyl(2-hydroxypropyl)ammonium, tripropyl(2-hydroxypropyl)ammonium, tributyl(2-hydroxypropyl)ammonium, dimethylbenzyl(2-hydroxypropyl)ammonium, dimethylbenzyl(2-hydroxyethyl)ammonium and combinations thereof.

3. Composition according to Claim 2, **characterized in that** R³ is phenyl or alkylphenyl, or is a radical that derives from phthalic acid, isophthalic acid, terephthalic acid or pyromellitic acid.

4. Composition according to any of Claims 1 to 3, **characterized in that** the salts of amino acid derivatives satisfy the following formula (II): 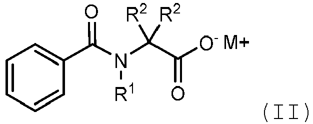
with R¹, R², M⁺ as defined above,
where R² in each case is preferably H,
where R¹ and R² are further preferably each H,
where, in particular, R¹ and R² are each H and M⁺ is Na⁺, K⁺ or NR¹₄⁺, R¹ as defined above.

5. Composition according to any of Claims 1 to 4, **characterized in that** the total proportion by mass of salts of amino acid derivatives present, based on the resulting polyurethane foam, is from 0.01% to 10% by weight, preferably from 0.1% to 5% by weight.

6. Process for producing rigid polyurethane foam by reacting one or more polyol components with one or more isocyanate components, **characterized in that** the reaction is effected in the presence of a catalyst that catalyses the formation of a urethane or isocyanurate bond, where the catalyst comprises salts of amino acid derivatives that conform to the specifications of at least one of Claims 1 to 5, especially using a composition according to any of Claims 1 to 5.

7. Process according to Claim 6, **characterized in that** the salts of amino acid derivatives are supplied to the reaction mixture for production of the rigid PU foam in a carrier medium, preferably comprising glycols, alkoxylates or oils of synthetic and/or natural origin.

8. Use of salts of amino acid derivatives that conform to the specifications of at least one of Claims 1 to 5 as catalyst in the production of rigid polyurethane foams, preferably for improving the use properties of the rigid polyurethane foam, especially for increasing the compression hardness of the rigid polyurethane foam at an earlier juncture compared to rigid polyurethane foams that have been produced without the salts of amino acid derivatives, compression hardness determinable to DIN EN ISO 844:2014-11.

9. Rigid polyurethane foam obtainable by the process according to Claim 6 or 7.

10. Use of the rigid polyurethane foam according to Claim 9 for thermal insulation purposes, preferably as insulation boards and/or insulant, especially for cooling apparatuses.

## Revendications

1. Composition pour la préparation de mousse dure de polyuréthane, comprenant au moins un composant isocyanate, un composant polyol, éventuellement un stabilisant de mousse, éventuellement des agents gonflants, **caractérisée en ce que** la composition contient au moins un catalyseur, qui catalyse la formation d'une liaison uréthane ou isocyanurate, le catalyseur comprenant des sels de dérivés d'aminoacides, les dérivés d'aminoacides pouvant être obtenus par transformation d'aminoacides et d'acides carboxyliques aromatiques, d'esters d'acides carboxyliques aromatiques, d'halogénures d'acides carboxyliques aromatiques et/ou d'anhydrides d'acides carboxyliques aromatiques.

2. Composition selon la revendication 1, **caractérisée en ce que** les sels de dérivés d'aminoacides satisfont à la formule (I) suivante 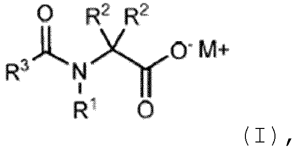 dans laquelle
R³ représente un radical aromatique, le cas échéant un radical aromatique à plusieurs noyaux, qui peut présenter des substitutions, éventuellement aussi d'autres fonctions carboxy auxquelles d'autres aminoacides peuvent être liés,
R³ représentant de préférence 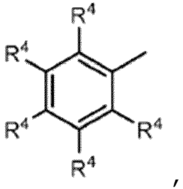
R¹, R², R⁴ représentant indépendamment les uns des autres H, alkyle, alcényle, aryle ou alkylaryle en C₁-C₁₈, qui peuvent également être substitués,
M⁺ représente un cation, tel que de préférence un cation de métal alcalin ou un cation d'ammonium ou un cation d'ammonium substitué, de préférence Li⁺, Na⁺, K⁺, Rb⁺, Cs⁺ ou un cation d'ammonium substitué tel qu'avantageusement tétraalkylammonium, trialkylhydroxyalkylammonium, benzyltrialkylammonium, tétraméthylammonium, tétraéthylammonium, tétrabutylammonium, tétrapropylammonium, diméthyl-diallylammonium, triméthyl(2-hydroxypropyl)ammonium, triéthyl(2-hydroxypropyl)ammonium, tripropyl(2-hydroxypropyl)ammonium, tributyl(2-hydroxypropyl)ammonium, diméthylbenzyl(2-hydroxypropyl)ammonium, diméthylbenzyl(2-hydroxyéthyl)ammonium ainsi que leurs combinaisons.

3. Composition selon la revendication 2, **caractérisée en ce que** R³ représente phényle ou alkylphényle ou un radical qui est dérivé de l'acide phtalique, isophtalique, téréphtalique ou pyromellitique

4. Composition selon l'une des revendications 1 à 3, **caractérisée en ce que** les sels de dérivés d'aminoacides satisfont à la formule (II) suivante, 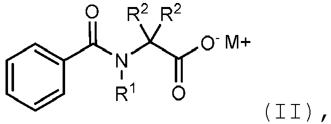
dans laquelle R¹, R², M⁺ sont tels que définis ci-dessus, R² représentant de préférence à chaque fois H,
plus préférablement R¹ et R² représentant à chaque fois H,
en particulier R¹ et R² représentant à chaque fois H et M⁺ représentant Na⁺, K⁺ ou NR¹₄⁺, R¹ étant défini comme ci-dessus.

5. Composition selon l'une des revendications 1 à 4, **caractérisée en ce que** la proportion massique totale contenue de sels de dérivés d'aminoacides, par rapport à la mousse de polyuréthane obtenue, représente 0,01 à 10% en poids, de préférence 0,1 à 5% en poids.

6. Procédé pour la préparation de mousse dure de polyuréthane par transformation d'un ou de plusieurs composants polyol avec un ou plusieurs composants isocyanate, **caractérisé en ce que** la transformation est effectuée en présence d'un catalyseur, qui catalyse la formation d'une liaison uréthane ou isocyanurate, le catalyseur comprenant des sels de dérivés d'aminoacides qui correspondent aux spécifications d'au moins l'une des revendications 1 à 5, en particulier à l'aide d'une composition selon l'une des revendications 1 à 5.

7. Procédé selon la revendication 6, **caractérisé en ce que** les sels de dérivés d'aminoacides sont ajoutés au mélange réactionnel pour la préparation de la mousse dure de PU dans un milieu support, comprenant de préférence des glycols, des alcoxylates ou des huiles d'origine synthétique et/ou naturelle.

8. Utilisation de sels de dérivés d'aminoacides qui correspondent aux spécifications d'au moins l'une des revendications 1 à 5, comme catalyseur lors de la fabrication de mousses dures de polyuréthane, de préférence pour améliorer les propriétés d'utilisation de la mousse dure de polyuréthane, en particulier pour augmenter la dureté à la compression de la mousse dure de polyuréthane à un moment plus précoce, par rapport à des mousses dures de polyuréthane qui ont été fabriquées sans les sels de dérivés d'aminoacides, la dureté à la compression pouvant être déterminée selon la norme DIN EN ISO 844:2014-11.

9. Mousse dure de polyuréthane pouvant être obtenue par le procédé selon la revendication 6 7.

10. Utilisation de la mousse dure de polyuréthane selon la revendication 9 à des fins d'isolation thermique, de préférence comme plaques d'isolation et/ou moyens d'isolation, en particulier pour des appareils de refroidissement.
